# EUROPÄISCHE PATENTSCHRIFT

(11) **EP 0 909 676 B1**
(45) Veröffentlichungstag und Bekanntmachung des Hinweises auf die Patenterteilung: **05.11.2003**
(21) Anmeldenummer: 98116601.0
(22) Anmeldetag: 02.09.1998
(51) Int. Cl.: B60N 2/00

(54) **Vorrichtung zur Kontaktierung elektronischer Komponenten in einem herausnehmbaren Fahrzeugsitz**
Device for contacting electronic components of a removable vehicle seat
Dispositif pour contacter des composants électroniques d' un siège de véhicule amovible

(30) Priorität: 16.10.1997 DE 19745652
(43) Veröffentlichungstag der Anmeldung: 21.04.1999
(73) Patentinhaber: DaimlerChrysler AG, 70567 Stuttgart (DE)
(72) Erfinder: Fritz, Karl-Heinz, 72135 Dettenhausen (DE); Geisel, Thomas, 72108 Rottenburg (DE); Holzapfel, Bernhard, 73630 Remshalden (DE); Schöber, Sabine, 42897 Remscheid (DE)

(56) Entgegenhaltungen:
- EP-A- 0 855 308
- DE-C- 19 644 219
- US-A- 5 167 421
- US-A- 5 340 185

## Beschreibung

Die Erfindung betrifft eine Vorrichtung zur Kontaktierung elektronischer Komponenten in einem herausnehmbaren Fahrzeugsitz gemäß dem Oberbegriff des Patentanspruchs 1.

Bei Fahrzeugen mit herausnehmbaren Sitzen, insbesondere Beifahrersitzen mit einer Entriegelungseinrichtung zur erleichterten mechanischen Lösung des Sitzes aus seiner karosserieseitigen Verankerung, stellt sich allgemein das Problem der zuverlässigen Kontaktierung von sitzseitig angeordneten elektronischen Einrichtungen, insbesondere solchen mit sicherheitsrelevanter, die Airbagauslösung beeinflussender Funktion (z.B. Sitzbelegungserkennung, Kindersitzerkennung, Gurtschloßschalter). Daneben muß gegebenenfalls auch eine Sitzheizung kontaktiert werden.

Die Erfindung geht aus von einer gattungsgemäßen Vorrichtung, welche durch eine z.B. im seitlichen Bereich des Sitzes am Mitteldom oder an der B-Säule angeordneten elektrischen Steckverbindung als elektrische Trennstelle, insbesondere Signaltrennstelle gebildet wird. Mittels der Steckverbindung sind die sitzseitigen elektronischen Komponenten an den karosserieseitigen Kabelsatz anschließbar. Aufgrund des zu überbrückenden Verstellbereiches des Sitzes in Fahrzeuglängsrichtung ist die Kontaktierung der Steckverbindung zumindest einseitig über ein flexibles Kabel (Kabelschwanz) ausgeführt.

Dabei stellt sich das Problem, daß beim Ausbauen des Sitzes leicht übersehen werden kann, zuvor die Steckverbindung zu trennen. Weil beim Ausbau des Sitzes vergleichsweise hohe mechanische Kräfte auftreten können, kann dieses Versäumnis zu einer Zerstörung der Steckverbindung führen.

Aufgabe der Erfindung ist es, eine Vorrichtung gemäß dem Oberbegriff des Anspruchs 1 so auszubilden, daß eine unbeabsichtige Zerstörung der Steckverbindung beim Herausnehmen des Sitzes vermieden wird.

Diese Aufgabe wird durch die Merkmale des Patentanspruchs 1 oder des Patentanspruchs 5 gelöst, wobei die Merkmale der Unteransprüche vorteilhafte Aus- und Weiterbildungen kennzeichnen.

Bei der erfindungsgemäßen Lösung gemäß dem ersten Ausführungsbeispiel nach Anspruch 1 muß zur Entriegelung des Sitzes zuvor die Steckverbindung manuell von dem Bediener getrennt werden. Erst dann wird die Entriegelung des Sitzes freigegeben. Damit wird wirksam verhindert, daß eine versehentlich nicht gelöste Steckverbindung durch die beim Ausbau der Sitzes auftretenden Kräfte zerstört werden kann. Die vorgeschlagenen Lösung ist kostengünstig, robust und wenig anfällig gegen Verschmutzung.

Bei der erfindungsgemäßen Lösung gemäß dem zweiten oder dritten Ausführungsbeispiel zu Anspruch 5 ist eine elektrische Steckverbindung vorgesehen, die beim Ein- und Ausbau des Sitzes selbsttätig durch die Relativbewegung des Sitzes kontaktiert beziehungsweise dekontaktiert. Eine Zerstörung der Steckverbindung beim Herausnehmen des Sitzes wird verhindert, indem die Bewegung des Sitzes bis zur Trennung der Steckverbindung durch geeignete Führungssmittel entlang einer auf die Steckverbindung angepaßten Kontaktierungstrajektorie geführt wird. Ein weiterer Vorteil dieser Ausführungsbeispiele ist, daß beim Einbau des Sitzes die sitzseitigen elektronischen Einrichtungen mit dem karosserieseitigen Kabelsatz selbsttätig kontaktiert werden.

Weitere Einzelheiten und vorteilhafte Weiterbildungen der erfindungsgemäßen Vorrichtung ergeben sich aus weiteren Unteransprüchen in Verbindung mit der folgenden Beschreibung.

Ein Ausführungsbeispiel der Erfindung ist in der Zeichnung dargestellt und wird nachstehend erläutert. Es zeigen:
- Fig. 1: ein erstes Ausführungsbeispiel der erfindungsgemäßen Vorrichtung,
- Fig. 2: ein zweites Ausführungsbeispiel der erfindungsgemäßen Vorrichtung,
- Fig. 3: ein drittes Ausführungsbeispiel der erfindungsgemäßen Vorrichtung.

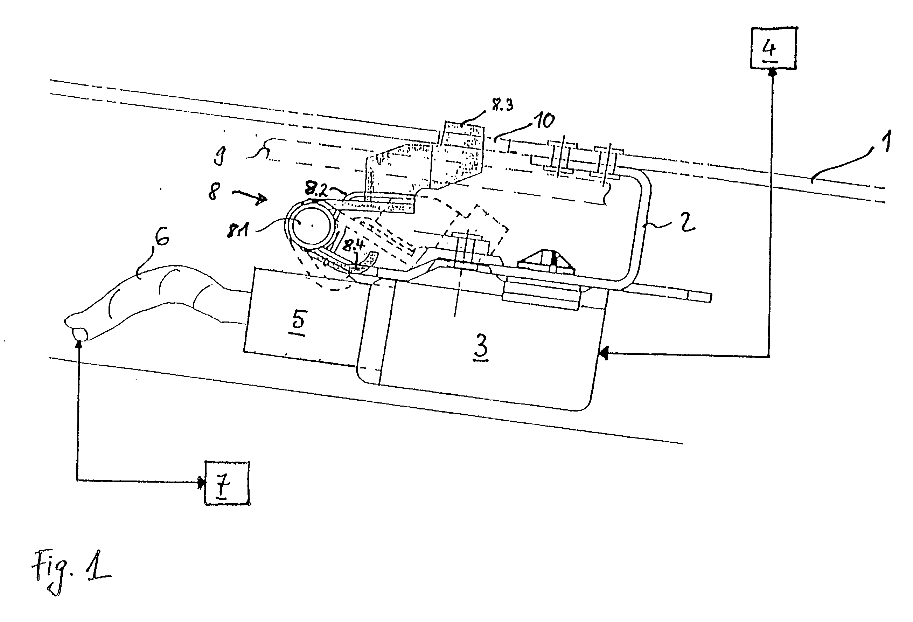

Die Fig. 1 zeigt eine Detailansicht aus dem Bodenbereich des Sitzes mit einer Sitzschiene, welche der Verankerung des Sitzes im Fahrzeug dient. Üblicherweise ist zur Befestigung des Sitzes bei gleichzeitiger Längsverschiebbarkeit ein ineinanderlaufendes Sitzschienenpaar mit einer karosseriefesten und einer gegenüber dieser längsverschiebbaren sitzseitigen Schiene vorgesehen.

Bei dem in Fig. 1 dargestellte Ausführungsbeispiel wird die Sitzschiene 1 durch die sitzseitige Schiene gebildet. An ihr ist mittels eines Bügels 2 ein als Buchse 3 ausgebildetes erstes Steckverbindungsteil befestigt, welches mit den sitzseitigen elektronischen Komponenten 4 (z.B. Sitzbelegungserkennungssensor oder Gurtschloßschalter) elektrisch verbunden ist. In diese Buchse 3 kann ein als Stecker 5 ausgebildetes zweites Steckverbindungsteil eingesteckt werden, welches über einen als Kabelschwanz 6 ausgebildeteten karosserieseiten Kabelsatz mit karosserieseitigen elektronischen Komponenten 7 (z.B. Airbagsteuergerät) elektrisch verbunden ist.

Des weiteren ist eine Sicherungseinrichtung 8 vorgesehen, welche umfaßt: einen Scharnierbolzen 8.1, eine Feder 8.2, einen Verriegelungsarm 8.3 mit angeformten Verriegelungsnocken 8.4. Der Verriegelungsnocken 8.4 und mit ihm der Verriegelungsarm 8.3 sind durch Ein- und Ausstecken des Steckers 5 betätigbar.

Bei gestecktem Stecker 5 ist über den Verriegelungsnocken 8.4 der Verriegelungsarm 8.3 in eine Sperrlage geschwenkt, welche die Betätigung einer Sitzentriegelungsklinke 9 sperrt. Die Sitzentriegelungsklinke 9, bei deren Betätigung der Fahrzeugsitz aus seiner Verankerung lösbar ist, ist Teil einer nicht dargestellten Sitzentriegelungseinrichtung. Bei Ziehen des Steckers 5, d.h. Trennung der Steckverbindung 3, 5 geht der Verriegelungsarm 8.3 unterstützt durch die Feder 8.2 in eine Freigabestellung (gestrichelt eingezeichnet), bei der eine Betätigung der Sitzentrieglungsklinke 9 und damit eine Entriegelung des Fahrzeugsitzes freigegeben ist.

Zur mechanischen Unterstützung des Verriegelungsarms 8.3 in der Sperrlage kann vorgesehen sein, daß dieser in ein Fenster 10 der Sitzschiene 1 eingreift.

Mit der erfindungsgemäßen Vorrichtung wird sichergestellt, daß vor Entriegelung des Sitzes die Steckverbindung 3, 5 manuell getrennt werden muß. Durch eine formschlüssige Blockade des Entriegelungseinrichtung mittels der Sicherungseinrichtung 8 wird eine Entriegelung bei nicht getrennter Steckverbindung 3, 5 wirksam verhindert.

In einer vorteilhaften Weiterbildung kann vorgesehen sein, daß die Entriegelungsvorrichtung nur dann freigegeben wird, wenn zusätzlich Stecker 5 und Kabelschwanz 6 in einer definierten Parkposition, insbesondere in einem Staufach abgelegt sind. Eine entsprechende Abwandlung der Sicherungseinrichtung 8 ist von dem Fachmann leicht ausführbar. Eine solche Weiterbildung hat den Vorteil, daß der Bediener gezwungen wird Stecker 5 und Kabelschwanz 6 zu verstauen, wodurch diese vor Schmutz und Beschädigung geschützt werden.

Noch eine vorteilhafte Weiterbildung, insbesondere in Kombination mit der voranstehend genannten Weiterbildung, besteht darin, ein Staufach, in welches nach Ausbau des Sitzes der Kabelschwanz 6 mit Stecker 5 verstaut werden können, mit einer einfachen Auswurfmechanik zu versehen, welche beim Einbau des Sitzes selbsttätig auslöst und den Kabelschwanz 6 mit Stecker 5 auswirft. Damit wird der Bediener aufgefordert, die Steckverbindungsteile 3, 5 zusammenzustecken und die sitzseitigen elektronischen Komponenten 4 zu kontaktieren.

Alternativ zu dem in Fig. 1 gezeigten Ausführungsbeipiel ist der allgemeine Erfindungsgedanke auch auf eine Ausführung anwendbar, bei der die Sitzschiene 1 nicht durch die sitzseitige Schiene sondern durch die eingangs erwähnte karosseriefeste Schiene des Sitzschienenpaares gebildet wird. Dann ist die Buchse 3 mit karosserieseitigen elektronischen Komponenten und der Stecker 5 mit sitzseitigen elektronischen Komponenten verbunden. Alle oben vorgeschlagenen erfindungsgemäßen und vorteilhaften Maßnahmen sind auf diese Verhältnisse ohne weiteres übertragbar.

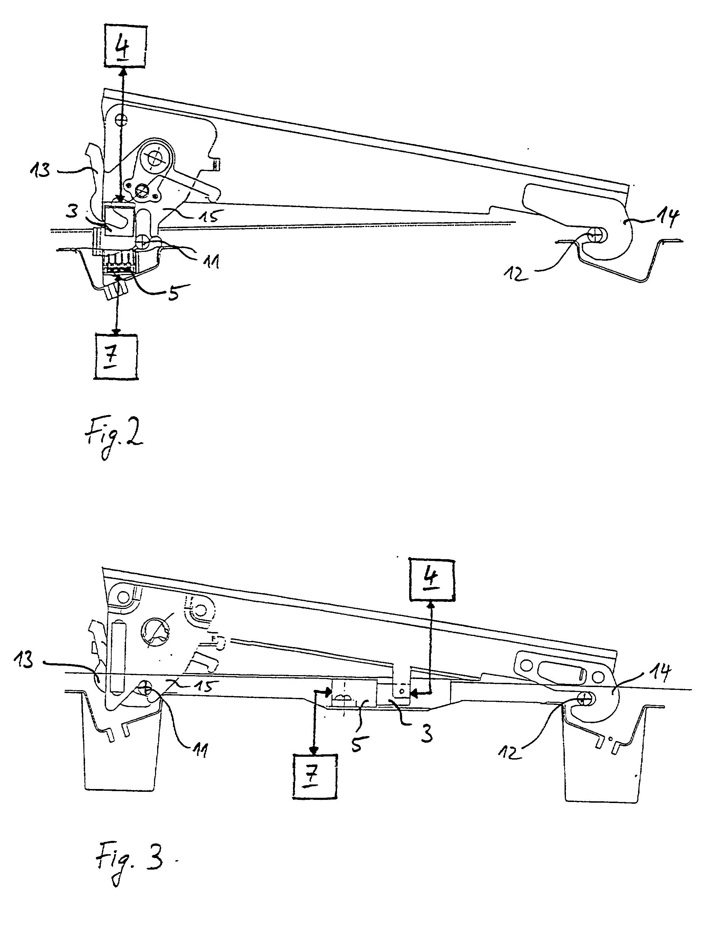

In Fig. 2 und Fig. 3 ist die Seitenansicht des Unterbaus eines Fahrzeugsitzes mit Teilen der Sitzentriegelungseinrichtung gezeigt. Die Fig. 2 zeigt einen nichtverriegelten, z.B. gerade entriegelten Sitz und die Fig. 3 einen verriegelten Sitz. Die Positionszeichen für die Steckverbindungsteile 3, 5 und die elektronischen Komponenten 4, 7 wurden beibehalten. Die Sitzentriegelungseinrichtung umfaßt in der gezeigten Ansicht karosseriefeste Verankerungsbolzen 11, 12 und sitzseitige, Riegel 13, 14, 15 wovon einer als Schwenkriegel 13 ausgebildet ist, welcher in Schließstellung den einen Verankerungsbolzen 11 umgreift. Die Riegel 14, 15 sind als einseitig offene Führungsschlitze ausgebildet. Die Führungsschlitze sind dabei so angeordnet und bemessen, daß im Zusammenwirken mit den jeweiligen Verankerungsbolzen 11, 12 der Sitz relativ zur Karosserie entlang einer definierten Kontaktierungstrajektorie geführt wird. Die Kontaktierungstrajektorie ist in Richtung und Länge auf die Steckverbindung 3, 5 und deren Anordnung so angepaßt, daß bei einer Entriegelung des Sitzes das sitzseitige Steckverbindungsteil 3 von dem karosserieseitigen Steckverbindungsteil 5 zerstörungsfrei getrennt wird. In Fig. 2 ist eine Ausführung mit überwiegend vertikaler und in Fig. 3 mit überwiegend horizontaler Kontaktierungstrajektorie gezeigt.

Die Ausführungsbeispiele in Fig. 2 und 3 haben den Vorteil, daß sie auch eine selbsttätige Schließung der Steckverbindung 3, 5 beim Einbau des Sitzes und Bewegung des Schwenkriegels 13 in die Schließstellung ermöglichen. Damit ist eine Kontaktierung der sitzseitigen elektronischen Komponenten immer sichergestellt.

## Patentansprüche

1. Sitzentriegelungseinrichtung und ein herausnehmbarer Fahrzeugsitz, welcher mittels der Sitzentriegelungseinrichtung aus seiner karosserieseitigen Verankerung mechanisch lösbar ist, und mit einer Vorrichtung zur kontaktierung elektronischer komponenten in dem Fahrzeugsitz wobei diese Vorrichtung eine Steckverbindung umfaßt mit
- einem karosserieseitigen Steckverbindungsteil (5), welches mit einem karosserieseitigen Kabelsatz (6) verbundenen ist, und
- einem sitzseitigen Steckverbindungsteil (3), welches mit den sitzseitigen elektronischen Komponenten verbundenen ist,
**dadurch gekennzeichnet,**
**daß** eine auf die Sitzentriegelungseinrichtung einwirkende Sicherungseinrichtung (8) vorgesehen ist, welche mit der Steckverbindung (3, 5) in der Weise zwangsgekoppelt ist, daß eine auf die Sitzentriegelungseinrichtung durch die Sicherungseinrichtung (8) ausgeübte Sperre nur dann lösbar ist, wenn die beiden Steckverbindungsteile (3, 5) zuvor getrennt wurden.

2. Vorrichtung nach Anspruch 1,
**dadurch gekennzeichnet,**
**daß**
- die Sitzentriegelungseinrichtung eine manuell betätigbare Sitzklinke (9) aufweist, bei deren Betätigung der Fahrzeugsitz aus seiner Verankerung gelöst wird,
- die Sicherungseinrichtung (8) einen Verriegelungsarm (8.3) aufweist, welcher in Sperrlage die Bewegung der Sitzklinke (9) formschlüssig sperrt, wobei der Verriegelungsarm (8.3) durch die beim Herstellen der Steckverbindung zwischen beiden Steckverbindungsteilen (3, 5) auftretende Relativbewegung vermittels eines Verriegelungsnockens (8.4) in die Sperrlage bewegbar ist und durch Trennen der Steckverbindung (3, 5) aus der Sperrlage heraus bewegbar ist.

3. Vorrichtung nach Anspruch 2,
**dadurch gekennzeichnet,**
**daß** die Entriegelungsvorrichtung (8) nur dann freigegeben wird, wenn zusätzlich Stecker (5) und Kabelschwanz (6) in einer definierten Parkposition, insbesondere in einem Staufach abgelegt sind.

4. Vorrichtung nach Anspruch 2 oder 3,
**dadurch gekennzeichnet,**
**daß** ein Staufach, in welches nach Ausbau des Sitzes der Kabelschwanz (6) mit Stecker (5) verstaut werden können, mit einer einfachen Auswurfmechanik zu versehen ist, welche beim Einbau des Sitzes selbsttätig auslöst und den Kabelschwanz (6) mit Stecker (5) auswirft.

5. Sitzentriegelungseinrichtung und ein herausnehmbarer Fahrzeugsitz, welcher mittels der Sitzentriegelungseinrichtung aus seiner karosserieseitigen Verankerung mechanisch lösbar ist, und mit einer Vorrichtung zur kontaktierung elektronischer komponenten in dem Fahrzeugsitz wobei diese Vorrichtung eine Steckverbindung umfaßt mit
- einem karosserieseitigen Steckverbindungsteil (3), welches mit einem karosserieseitigen Kabelsatz verbundenen ist, und
- einem sitzseitigen Steckverbindungsteil (5), welches mit den sitzseitigen elektronischen Komponenten verbundenen ist,
**dadurch gekennzeichnet,**
**daß** die Sitzentriegelungseinrichtung umfaßt: karosseriefeste Verankerungsbolzen (11, 12) und sitzseitige, Riegel (13, 14, 15) wovon einer als Schwenkriegel (13) ausgebildet ist, welcher in Schließstellung den einen Verankerungsbolzen (11) umgreift, wobei die Riegel (14, 15) als einseitig offene Führungsschlitze ausgebildet sind, welche so angeordnet und bemessen sind, daß im Zusammenwirken mit den jeweiligen Verankerungsbolzen (11, 12) der Sitz relativ zur Karosserie entlang einer definierten Kontaktierungstrajektorie geführt wird, welche in Richtung und Länge auf die Steckverbindung (3, 5) und deren Anordnung so angepaßt ist, daß bei einer Entriegelung des Sitzes das sitzseitige Steckverbindungsteil (3) von dem karosserieseitigen Steckverbindungsteil (5) zerstörungsfrei getrennt wird.

## Claims

1. Seat unlocking system and a removable vehicle seat, which can be mechanically released from its body-side anchoring by means of the seat unlocking system, having a device for establishing contact with electronic components in the vehicle seat, which device has a plug-in connection with
- a body-side plug-in part (5) connected to a body-side cable system (6) and
- a seat-side plug-in part (3) connected to the seat-side electronic components,
**characterised in that**
a locking system (8) acts on the seat unlocking system and is forcibly coupled with the plug-in connection (3, 5) so that a block applied to the seat unlocking system by the locking system (8) can not be released unless the two plug-in parts (3, 5) are disconnected beforehand.

2. System as claimed in claim 1,
**characterised in that**
- the seat unlocking system has a manually operated seat pawl (9), which releases the vehicle seat from its anchoring when operated,
- the locking system (8) has a locking arm (8.3) which positively blocks any movement of the seat pawl (9) in the locked position, and the locking arm (8.3) is moved into the locked position as a result of the relative displacement caused by the locking cam (8.4) when the plug-in connection is established between the two plug-in parts (3, 5) and is moved out of the locked position by disconnecting the plug-in connection (3, 5).

3. Device as claimed in claim 2,
**characterised in that**
the unlocking system (8) can not be released unless plug (5) and cable length (6) are additionally placed in a defined parked position, in particular in a stowage compartment.

4. Device as claimed in claim 2 or 3,
**characterised in that**
a stowage compartment, in which the cable length (6) with plug (5) can be stowed when the seat is removed, has an ejector mechanism, which is automatically released when the seat is re-fitted and ejects the cable length (6) with plug (5).

5. Seat unlocking system and a removable vehicle seat, which can be mechanically released from its body-side anchoring by means of the seat unlocking system, having a device for establishing contact with electronic components in the vehicle seat, which device has a plug-in connection with
- a body-side plug-in part (3) connected to a body-side cable system and
- a seat-side plug-in part (5) connected to the seat-side electronic components,
**characterised in that**
the seat unlocking system comprises: anchoring bolts (11, 12) fixed to the body and, seat-side, locks (13, 14, 15), one of which is provided in the form of a swivel lock (13) which engages around the one anchoring bolt (11) in the locked position, the locks (14, 15) being designed as guide slots open at one end, which are arranged and dimensioned so that, in co-operation with the respective anchoring bolts (11, 12), the seat is guided along a defined contact trajectory relative to the body, the direction and length of which is adapted to the plug-in connection (3, 5) and its disposition so that when the seat is unlocked, the seat-side plug-in part (3) is disconnected from the body-side plug-in part (5) unhampered.

## Revendications

1. Système de déverrouillage de siège et un siège de véhicule amovible, lequel est détachable mécaniquement par rapport à un ancrage côté carrosserie au moyen du système de déverrouillage, et comportant un dispositif pour mettre en contact des composants électroniques dans le siège de véhicule, moyennant quoi ce dispositif comprend un connecteur comportant :
- une partie de connecteur (5) côté carrosserie, laquelle est reliée avec un faisceau de câbles (4) côté carrosserie, et
- une partie de connecteur (3) côté siège, laquelle est reliée avec les composants électroniques côté siège
**caractérisé en ce qu'**il est prévu un système de sécurité (8) agissant sur le système de déverrouillage de siège, lequel est couplé en force avec le connecteur (3, 5) de telle manière qu'un cliquet verrou enclenché par le système de sécurité (8) sur le système de déverrouillage de siège ne peut être relâché qu'une fois que les deux parties de connecteur (3, 5) ont préalablement été séparées.

2. Dispositif selon la revendication 1, **caractérisé en ce que** :
- le dispositif de déverrouillage de siège présente une manette de siège (9) actionnable manuellement, dont l'actionnement provoque le désengagement du siège de véhicule hors de son ancrage,
- le dispositif de sécurité (8) comporte un bras de verrouillage (8.3), lequel, en position de blocage, bloque en circonférence le mouvement de manette de siège (9), moyennant quoi le bras de verrouillage (8.3) est déplaçable vers la position de blocage au moyen d'une came de verrouillage (8.4) lors du mouvement relatif provoqué par l'enfichage des deux parties de connecteur (3,5) assemblant le connecteur et est déplaçable en se dégageant hors de la position de blocage du fait du désenfichage désassemblant le connecteur (3, 5).

3. Dispositif selon la revendication 2, **caractérisé en ce que** le dispositif de déverrouillage (8) n'est libéré que lorsque, en supplément, le connecteur (5) et le faisceau de câbles (6) sont rangés dans une position d'immobilisation, en particulier dans un compartiment de rangement.

4. Dispositif selon la revendication 2 ou 3, **caractérisé en ce qu'**un compartiment de rangement, dans lequel le faisceau de câbles (6) conjointement avec le connecteur (5) peuvent être rangés consécutivement au démontage du siège, doit est muni d'un mécanisme d'éjection simple, lequel se déclenche automatiquement lors du montage du siège et éjecte le faisceau de câbles (6) conjointement avec le connecteur (5).

5. Système de déverrouillage de siège et un siège de véhicule amovible, lequel est détachable mécaniquement par rapport à un ancrage côté carrosserie au moyen du système de déverrouillage, et comportant un dispositif pour mettre en contact des composants électroniques dans le siège de véhicule, moyennant quoi ce dispositif comprend un connecteur comportant :
- une partie de connecteur (3) côté carrosserie, laquelle est reliée avec un faisceau de câbles côté carrosserie, et
- une partie de connecteur (5) côté siège, laquelle est reliée avec les composants électroniques côté siège,
**caractérisé en ce que** le système de déverrouillage de siège comprend : des boulons d'ancrage (11, 12) solidaires à la carrosserie et des verrous (13, 14, 15) côté siège, dont l'un est réalisé comme un verrou pivotant (13) qui, en position fermée, prend en prise circulaire l'un des boulons d'ancrages (11), moyennant quoi les verrous (14, 15) sont réalisés comme des fentes de guidage ouvertes sur un côté, lesquelles sont disposées et dimensionnées de telle sorte que, lorsqu'ils coopèrent avec les boulons d'ancrage (11, 12) respectifs, le siège soit guidé, par rapport à la carrosserie, le long d'une trajectoire de mise en contact définie qui est adaptée, dans l'orientation et dans la longueur au connecteur (3, 5) ainsi que dans son agencement de telle sorte que, lors d'un déverrouillage du siège, la partie de connecteur côté siège (3) soit séparée de façon non destructive de la partie de connecteur côté carrosserie (5).
